# EUROPÄISCHE PATENTSCHRIFT

(11) **EP 3 941 858 B1**
(45) Veröffentlichungstag und Bekanntmachung des Hinweises auf die Patenterteilung: **09.11.2022**
(21) Anmeldenummer: 20717151.3
(22) Anmeldetag: 02.04.2020
(51) Int. Cl.: G05B 19/418, H04L 12/403, H04L 12/40

(54) **VORRICHTUNG UND VERFAHREN ZUR VERBESSERUNG DER KOMMUNIKATION VON MODULAREN FÖRDERSYSTEMEN**
APPARATUS AND METHOD FOR IMPROVING THE COMMUNICATION OF MODULAR CONVEYOR SYSTEMS
DISPOSITIF ET PROCÉDÉ D'AMÉLIORATION DE LA COMMUNICATION DE SYSTÈMES DE TRANSPORT MODULAIRES

(30) Priorität: 02.04.2019 DE 102019204709
(43) Veröffentlichungstag der Anmeldung: 26.01.2022
(73) Patentinhaber: Cellumation GmbH, 28357 Bremen (DE)
(72) Erfinder: URIARTE, Claudio, 28309 Bremen (DE); KUZNETSOV, Ivan, 28359 Bremen (DE); BANDE FIRVIDA, Miguel, 28719 Bremen (DE)
(74) Vertreter: RCD Patent Giesen, Schmelcher & Griebel Patentwanwälte PartG mbB
(86) Internationale Anmeldenummer: PCT/EP2020/059381
(87) Internationale Veröffentlichungsnummer: WO 2020/201413

(56) Entgegenhaltungen:
- EP-A1- 2 455 310
- EP-A1- 3 418 834
- DE-A1-102017 215 508
- DE-U1-212006 000 033
- US-A1- 2012 004 766

## Beschreibung

Die Erfindung betrifft eine Vorrichtung und ein Verfahren zur Verbesserung der Kommunikation von modularen Fördersystemen.

### Hintergrund

Im modernen Anlagenbau sowie in fördertechnischen Anlagen werden logistische Objekte wie zum Beispiel Boxen, Behälter, Trays, Paletten, usw. sowie Werkstücke beziehungsweise Werkstückträger mittels Materialflusssystemen transportiert. Diese Systeme bestehen aus einem mechanischen Aufbau, einer elektrischen Verkabelung und einer Steuerung.

Moderne Materialflusssysteme sind in der Regel mechanisch modular aufgebaut. Zu den Fördermodulen zählen Förderer, Ausschleuser, Kurven, Kreuzungen, Zusammenführungen oder Merger, Transfertische usw. Jedes der Module gibt es in zahlreichen Konfigurationen je nach Länge, Rollenteilung, Breite, Leistung usw. Eine Förderanlage setzt sich zusammen aus einer Pluralität von unterschiedlichen Fördermodulen die zusammen angeschlossen werden.

Bei herkömmlichen Fördermodulen ist das zu transportierende Objekt kleiner als das Fördermodul selbst. Häufig finden auf einem Fördermodul somit ein oder mehrere Objekte gleichzeitig Platz. Das Fördermodul ist alleine in der Lage die Objekte über längere Strecken zu fördern. Fördermodule die größer als das Fördergut sind, werden als großskalig bezeichnet. Fördermodule dagegen die kleiner als das Fördergut sind werden als kleinskalig bezeichnet. In diesem Fall ist für das Fördern eines Förderguts zu jedem Zeitpunkt eine Pluralität von Fördermodulen notwendig. Diese Fördermodule können je nach Gestaltung der Antriebe uni-, bi- oder omnidirektional sein. Kleinskalige Fördermodule stellen eine relativ neue Entwicklung dar. Diese werden in der Regel in einem dreieckigen, viereckigen oder sechseckigen Raster angeordnet sein. Auch irreguläre Raster sind jedoch möglich.

Die Steuerung von Materialflusssystemen wird in der Regel als Zentralsteuerung realisiert und ist auf mehrere Ebenen verteilt. Die übergeordnete Ebene (bspw. ein Warehouse Management System - WMS), wo die Logik für den korrekten Ablauf des Materialablaufs hinterlegt ist, gibt Befehle zur Ausführung in einer Hochsprache an die darunterliegende Steuerung weiter. Diese zweite Ebene bestehet aus einer oder mehreren in der gesamten Anlage verteilten programmierbaren Steuerung(en) (SPS) und ist für die Steuerung der Fördermodule zuständig. Diese Ebene kann Daten aus Sensoren oder Fremdsystemen bearbeiten und Antriebe und Aktuatoren ansteuern. In diesem Fall sind Antriebe, Aktuatoren und Sensoren direkt mit der SPS verbunden. Moderne Fördermodule besitzen zudem eine dritte Steuerungsebene, die sog. "lokale Steuerung". Diese lokalen Steuerungen sind in die Fördermodule in unmittelbarer Nähe der Antriebe/Sensorik eingebaut. Sie können eine geringe Anzahl von Sensorsignalen bearbeiten und eine geringe Anzahl von Antrieben ansteuern. Sie können relativ einfache und auf die lokale Ebene begrenzte Aufgaben selbstständig erledigen, wie z.B. eine sogenannte Staudrucklose Förderung, bei der Objekte hintereinander in Start/Stopp-Betrieb bewegt werden, ohne dass sie sich dabei berühren. Ein Beispiel für eine solche Steuerung einer staudrucklosen Förderung wird in der EP 2 455 310 A1 beschrieben.

Die Spanungsversorgung von Materialflusssystemen erfolgt entweder vollständig zentral oder teildezentral. Bei der zentralen Spannungsversorgung werden alle Fördermodule direkt aus dem Schaltschrank versorgt.

Der Prozess der Planung eines Materialflusssystems bis zu seiner Nutzung fängt mit der Layout-Planung an. Hier werden die Funktionalitäten der Anlage und zu erreichende Leistungsparameter definiert, ein Lastenheft erstellt und häufig das Projekt ausgeschrieben. Systemintegratoren arbeiten ein technologisches Konzept, eine Layoutplanung und Auswahl der Fördermodule für die Umsetzung aus und bewerben sich damit. Der Prozess dauert in der Regel mehrere Wochen und ist für den Bewerber mit großen Personalkosten und Unsicherheit über den Ausgang der Ausschreibung verbunden. Nach Erhalt des Zuschlags geht es in die Detailplanung, das Layout wird präzisiert und die Fördermodule ausgelegt und dimensioniert. Die Herstellung der einzelnen Module kann erst nach Abschluss der Planung und Abnahme durch den Kunden erfolgen, da Änderungen im Prozess oder Layout ab diesem Punkt sehr aufwendig zu realisieren und mit hohen Kosten verbunden sind. Die Herstellung wird meistens Kunden- und Auftragsspezifisch realisiert und kann mehrere Monate dauern. Aufgrund der kundenspezifischen Anpassungen können Fördermodule selten auf Vorrat produziert werden. Eine vollständige Inbetriebnahme beim Hersteller wird aus praktischen Gründen in der Regel nicht stattfinden. Nach dem mechanischen Aufbau vor Ort werden die Leitungen für die Steuerung verlegt. Diese können in die Fördermodule eingebaut werden. Antriebe und Sensorik können direkt mit der übergeordneten Steuerung (SPS) verkabelt sein. Lokale Steuerungen, die für das Steuern von beispielsweise Motorrollen eingesetzt werden, können mit der übergeordneten Steuerung (SPS) entweder direkt verkabelt sein oder über ein BUSSystem angeschlossen sein. Die Spannungsversorgung erfolgt in ähnlicher Weise. Die Spannung wird über Parallelleitungen an den jeweiligen Antrieben geführt. Es entstehen somit sehr große Kabelbäume, die zu hohen Materialkosten und hohem Montageaufwand führen.

Im Anschluss findet die Inbetriebnahme statt. Die Topologie der Anlage wird händisch eingetragen, Fördermodule und Antriebe adressiert und die ersten Verdrahtungstests durchgeführt. Dieser Prozess wird als Konfiguration bezeichnet. Verdrahtungs- und Adressierfehler können erst zu diesem Zeitpunkt entdeckt werden. Fehlerbehebung und Änderungen ist zu diesem Zeitpunkt noch aufwändiger, da in der Regel die Inbetriebnahme zu einem späteren Zeitpunkt erfolgt und von einem anderen Team realisiert wird, als das Team das für Aufbau zuständig war. Das Layout der Anlage wird somit doppelt erfasst; das erste Mal beim mechanischen Aufbau und ein zweites Mal bei der Konfiguration der Anlage.

Während der Nutzungsdauer der Anlage kommt es auch häufig vor, dass Änderungen in der Funktion, in der Programmierung oder im Layout realisiert werden. Da die Module nur auf mechanischer Ebene modular aufgebaut sind und die Programmierung und Verkabelung noch zentral ausgeführt wurde, ist eine Veränderung der Anlage sehr aufwendig und in manchen Fällen nicht mehr möglich. Häufig ist es günstiger eine neue Anlage zu erwerben, als eine ältere Anlage zu verändern.

Das Problem ist allgemein bekannt und es gibt einige Fördersysteme, die versuchen diese Prozesse zu vereinfachen beziehungsweise die Nachteile zu beheben.

Aus der FR2991976 ist ein Fördersystem mit modularem mechanischem Aufbau mit dezentraler Steuerung bekannt, die in jedem Fördermodul des Fördersystems eingebaut ist. Als Fördermodul werden konventionelle Module verwendet, wie zum Beispiel Rollenförderer, Transfertische, Riemenüberschieber, usw. Die Fördermodule sind ab Werk verkabelt. Die integrierte Steuerung (die sog. Karte) besteht aus einem Prozessor (Recheneinheit), einer ersten Kommunikationsschnittstelle (I/O oder Feldbus) für den Signalaustausch mit den Antrieben der Fördertechnik beziehungsweise dessen Kontroller und einer zweiten Kommunikationseinheit für den Datenaustausch zwischen benachbarten Fördermodulen beziehungsweise deren Steuerungen. Die Kommunikationseinheit besitzt bis zu vier Anschlüsse (stromabwärts, stromaufwärts, links und rechts) und kommuniziert mit dem Nachbarn über ein Standard-Protokoll, konkret über Ethernet. Weiterhin offenbart die Publikation eine Methode für die automatische Erkennung von Anlagetopologien nachdem die Anlage mechanisch gebaut wurde. Der Leitrechner (SPS) fragt eine erste Karte nach der Topologie der Anlage. Diese Karte schickt eine Nachricht mit seiner ID stromabwärts und - aufwärts. Die empfangende Karte fügt seine ID in die Nachricht und leitet die Nachricht weiter. Wird eine Abzweigung erreicht, wird die ID der Abzweigung an die Nachricht hinzugefügt, die Nachricht kopiert und an jeden Ausgang geschickt. Die Abzweigung der Nachrichten wird über einen Switch realisiert. Bei einer Zusammenführung wird die ID des Moduls in die Nachricht hinzugefügt und diese stromabwärts weitergeleitet. Diese Weiterleitung wird wiederholt bis die Nachricht das Ende der Kette erreicht. Die Nachricht beinhaltet dann eine Liste der ID von allen Modulen, die passiert wurden. Die Nachricht wird über dem bereits gegangenen Weg zurückgeschickt und abschließend an den Leitrechner übermittelt. Der Rechner sammelt alle Nachrichten und bildet aus den Listen die Anlagetopologie.

Jede Karte kommuniziert mit den Nachbarn über Ethernet. Bei jeder Übertragung müssen die Nachrichten von der Recheneinheit bearbeitet werden. Bei Abzweigungen müssen diese über Switches in die richtige Richtung geleitet werden. Durch jede Übertragung erhöht sich die Latenz der Kommunikation. Diese steigt weiter mit der Anzahl der Module und Abzweigungen im Layout. Das Delay ist somit nicht deterministisch und die Kommunikation erfolgt somit nicht in Echtzeit. Da dieses System nur großskalige Fördermodule verwendet, ist die Fördergeschwindigkeit der Objekte deutlich geringer als die Übertragungsgeschwindigkeit der Nachrichten. Somit sind die Verzögerungen nicht weiterhin kritisch. Bei einer Anlage mit sehr vielen Modulen, oder bei einer Reduktion der Größe der Fördermodule oder der Erhöhung der Anzahl an Abzweigungen wird die Latenz kritisch. Diese Kommunikationsarchitektur ist für sehr große Anlagen bzw. bei kleinskaligen Fördersystemen daher nicht anwendbar.

Die DE102008059529 offenbart ein modulares Fördersystem System mit integrierter Steuerung. Die Anlage besteht aus einer Pluralität von viereckigen Transfertischen die Bewegungen in 2 Richtungen führen können: längs und quer. Jedes der Fördermodule besitzt zwei Antriebe mit dem passenden Motorkontroller und eine integrierte Steuerung, die eine ähnliche Architektur wie im vorherigen Beispiel hat. Die integrierten Steuerungen kommunizieren über eine Ethernet Schnittstelle miteinander. Die Module bekommen werksseitig eine Modul-Identifikationsnummer. Die benachbarten Module tauschen zunächst diese Identifikationsnummer. Darauf basierend kann ein Fördermodul eine Routingtabelle erstellen und speichern. Die Nachbarfördermodule tauschen Nachrichten mit den weiteren Nachbarn und erstellen selber eine Routingtabelle. Die Tabelle wird stromaufwärts geschickt sodass diese Fördermodule die Routingtabelle erweitern können. Wenn dieser Prozess häufig genug wiederholt wird, kann die Gesamttopologie der Anlage abgebildet werden und in jedem Fördermodul lokal gespeichert werden. Die Steuerung selbst besteht aus einem Mikrokontroller, d.h. aus einer Recheneinheit, für die Bearbeitung der Signale, einer Kommunikationsschnittstelle auf Ethernet-Basis für den Datenaustausch zwischen den Fördermodulen und einer Schnittstelle zur Steuerung der separaten Motorkontroller (vertikale Schnittstelle). Über eine geeignete Logik ist das Fördersystem in der Lage dezentral das Routing für den Transport der Objekte zu berechnen. Dieses System hat die gleichen Nachteile bezüglich Latenz wie das System der FR2991976.

Aus der DE202012001229 ist ein kleinskaliges Fördersystem bestehend aus mehreren rechteckigen Fördermodulen, die ebenfalls orthogonal zu einander in einer Matrix angeordnet sind, bekannt. Jedes Modul beinhaltet zwei Motoren, einen für das Antreiben der Rolle und einen für die Einstellung der Förderrichtung. Die Steuerung ist dezentral und in jedem Modul eingebaut. Sie besteht aus einer Recheneinheit für die Verarbeitung der Daten, einer Schnittstelle zur Steuerung der Antriebe und einer Kommunikationsschnittstelle zum Datenaustausch zwischen benachbarten Modulen. Die Kommunikation erfolgt mit einem seriellen Protokoll und drahtlos über Fotodioden die an jeder der vier Seiten der Fördermodule angeordnet sind. Die Module sind nicht in der Lage die Topologie der Anlage zu erkennen. Bei jedem Sprung müssen die Daten der Foto-Empfänger ausgelesen, im Mikrokontroller bearbeitet werden und mit der Leuchtdiode versendet werden. Die Datenübertragung erfolgt somit mit sehr hohen Latenzen, die nur über eine aufwändige Logik und mechanische Aufbauten zum Teil kompensiert werden können. Größere Anlage können somit nicht realisiert werden.

Aus der WO 2008/135371 A2 ist ein Fördermodul und ein Fördersystem mit integrierter Steuerung bekannt, das in der Lage ist seine Topologie selber zu bestimmen. Die Fördermodule können beliebige Förderfunktionen besitzen, bei denen der Prozess der Konfiguration der Anlage durch die Verwendung von Identifizierungsmitteln (bspw. Barcode, RFID, Transponder, usw.) die Informationen zum Förderelementtyp (Typ, Länge, Form, usw.) und zu den Übergabestellen (Kopplungsstellen) beinhalten. Nach Fertigstellung des mechanischen Aufbaus werden die Kopplungsstellen sowie ein Typisierungscode ausgelesen. Die Identifikationsmittel können manuell oder automatisch ausgelesen werden. Vorzugsweise wird die Ablesung paarweise realisiert; also zwei Identifikationsmittel von benachbarten Fördermodulen. Beim automatischen Prozess kommunizieren die Steuerungen miteinander und tauschen diese Informationen. Mit dieser Information können Grafen gebildet werden, die die (Teil-) Topologie der Anlage beschreiben. Ferner wird erwähnt, dass der Prozess von einer Software in einem Automatisierungsrechner gestartet werden kann.

Alle bisher bekannte modulare Fördersysteme weisen somit eine Kommunikationsmöglichkeit für die Kommunikation mit einer Zentralsteuerung und eine Kommunikationsmöglichkeit für die Kommunikation zwischen den Fördermodulen auf.

Obwohl die bekannten Fördersysteme auch weitere Kommunikationsschnittstellen aufweisen, dienen diese beiden bzw. weiteren Kommunikationsebenen jedoch nicht zur Kommunikation der Einzelfördermodule untereinander sondern insbesondere der Datenweitergabe an einen Motorcontroller, der den Antrieb der Fördereinrichtung der Module steuert. Dies ist auch bei der staudrucklosen Förderanlage der EP 2 455 310 A1 oder der Förderanlage der US 7,035,714 B2 der Fall.

Aufgrund der hohen Latenzen sind die bisher bekannten Fördersysteme mit integrierter Steuereinheit und teil-dezentralisierter Steuerung daher nicht für größere Systeme mit vielen Einzelfördermodulen geeignet. Auch die Variabilität der bisherigen Systeme im Hinblick auf ihre Einrichtung und vor Allem im Hinblick auf eine nachträgliche Änderung der Topologie des Systems sind verbesserungswürdig.

Es ist daher eine Aufgabe der Erfindung eine Vorrichtung und ein Verfahren bereitzustellen, die es ermöglichen, variabel sowohl große Fördersysteme mit vielen Einzelfördermodulen als auch kleine Fördersysteme mit wenigen Einzelfördermodulen derart zu steuern, dass eine Teil-dezentrale Steuerung ermöglicht wird. Es ist vor Allem darauf zu achten, dass die die Latenz der Kommunikation gering gehalten wird oder möglichst vollständig vermieden wird. Außerdem soll eine verbesserte Variabilität bei Änderungen bereitgestellt werden, um die Änderungen schneller ausführen zu können und auch die Planungs- und Aufstellzeit insbesondere von großen Fördersystemen mit vielen Einzelfördermodulen zu verringern und den Prozess insgesamt zu vereinfachen.

Die Aufgabe wird gelöst durch ein modulares Fördersystem umfassend mehrere Einzelfördermodule, wobei ein Einzelfördermodul
- mindestens eine Fördereinrichtung,
- mindestens eine Spannungsversorgung,
- mindestens einen Aktuator zum Antrieb der Fördereinrichtung,
- eine Leistungseinheit für die Steuerung des Aktuators und
- eine integrierte Steuereinheit umfasst,
wobei die integrierte Steuereinheit eine Recheneinheit für die Bearbeitung von Informationen, und eine Kommunikationseinheit aufweist, und wobei die Kommunikationseinheit ausgelegt ist, die Kommunikation der Einzelfördermodule einerseits mit einer Zentralsteuerung und/oder andererseits die Kommunikation der Einzelfördermodule untereinander durchzuführen, derart dass die Kommunikation der Einzelfördermodule untereinander in zwei logischen Kommunikationsebenen durch zwei voneinander getrennte und unabhängige Kommunikationsschnittstellen realisiert wird und eine Kommunikationsebene der Layouterkennung und Konfiguration des Fördersystems dient.

Unter dem Begriff modulares Fördersystem wird im Rahmen der vorliegenden Erfindung insbesondere ein Fördersystem verstanden, das verschiedenste logistische Objekte wie beispielsweise Pakete, Boxen, Behälter, Trays, Paletten, sowie Werkstücke oder Werkstückträger transportieren, sortieren und bewegen kann. Ein solches modulares Fördersystem ist aufgebaut aus einer Mehrzahl von Einzelfördermodulen.

Unter dem Begriff Einzelfördermodul, oder kurz Fördermodul, wird im Sinne der vorliegenden Erfindung insbesondere eine Fördereinrichtung verstanden, die in der Lage ist, die zu transportierenden Objekte räumlich zu verändern. Dies schließt sowohl eine translatorische Bewegung als auch eine Drehung der Objekte ein. Beispiele für solche bevorzugten Einzelfördermodule sind Förderer, Ausschleuser, Kurven, Kreuzungen, Zusammenführungen oder Merger, Transfertische usw. Jedes der Module gibt es in zahlreichen Konfigurationen je nach Länge, Rollenteilung, Breite, Leistung usw. Fördermodule die größer als das Fördergut sind, werden als großskalig bezeichnet. Fördermodule dagegen die kleiner als das Fördergut sind werden als kleinskalig bezeichnet. In diesem Fall ist für das Fördern eines Förderguts zu jedem Zeitpunkt eine Pluralität von Fördermodulen notwendig. Diese Fördermodule können je nach Gestaltung der Antriebe uni-, bi- oder omnidirektional sein. Kleinskalige Fördermodule stellen eine relativ neue Entwicklung dar. Diese werden in der Regel in einem dreieckigen, viereckigen oder sechseckigen Raster angeordnet sein. Auch irreguläre Raster sind möglich.

Die Erfindung betrifft mit anderen Worten ein modulares Fördersystem bestehend aus einer Pluralität von Fördermodulen mit integrierten Steuerungen. Das Fördersystem kann aus nur großskaligen, nur kleinskaligen oder einer Mischung von großskaligen und kleinskaligen Fördermodulen bestehen.

Als Fördereinrichtung werden die in dem Einzelfördermodul integrierten Rollen, Bänder etc. verstanden, die für die Fortbewegung bzw. Drehung der Objekte vorgesehen sind. Diese können verschiedene Funktionalitäten insbesondere bezüglich der möglichen Richtung der Bewegung haben und sind dem Fachmann im Allgemeinen bekannt.

Als Spannungsversorgung werden hier um im Folgenden nicht nur Netzteile, Wandler etc. sondern auch Kabel, Stecker und ähnliche Anschlüsse verstanden, durch die Strom zu dem Fördermodul zugeführt werden kann.

Unter dem Begriff Aktuator zum Antrieb der Fördereinrichtung wird insbesondere ein Motor, vorzugsweise ein Elektromotor verstanden, der die Fördereinrichtung in Bewegung bringen kann. Beispielsweise wird für jede Fördereinrichtung des Einzelfördermoduls ein Aktuator vorgesehen. Es kann aber auch nur ein Aktuator für eine Mehrzahl von Fördereinrichtungen in einem Einzelfördermodul vorgesehen sein.

Bei dem Begriff der Leistungseinheit für die Steuerung des Aktuators handelt es sich im Sinne der Erfindung ganz allgemein um einen Schalter zum Ein- und Ausschalten der Fördereinrichtung. Bevorzugt werden jedoch Motorcontroller (abgekürzt MC) eingesetzt, die nicht nur ein gezieltes Ein- und Ausschalten der Fördereinrichtung ermöglichen sondern auch beispielsweise Geschwindigkeit und Richtung steuern können. Der Begriff der Leistungseinheit für die Steuerung des Aktuators ist mithin gleichzusetzen mit dem Begriff Motorcontroller (MC).

Erfindungsgemäß weist jedes Einzelfördermodul eine integrierte Steuereinheit auf. Die integrierte Steuereinheit umfasst eine Recheneinheit für die Bearbeitung von Informationen und eine Kommunikationseinheit. Die Kommunikationseinheit ist dazu ausgelegt, die Kommunikation der Einzelfördermodule mit einer Zentralsteuerung einerseits und/oder andererseits die Kommunikation der Einzelmodule untereinander durchzuführen.

Weiterhin ist erfindungsgemäß vorgesehen, die Kommunikation der Einzelfördermodule untereinander derart durchzuführen, dass die Kommunikation der Einzelfördermodule untereinander in zwei logischen Kommunikationsebenen realisiert wird. Mithin wird damit nicht auch die Kommunikation zu den Motorcontrollern innerhalb des Einzelfördermoduls oder zu Motorcontrollern eines anderen Einzelfördermoduls verstanden sondern die Kommunikation der integrierten Steuereinheiten der jeweiligen Einzelfördermodule untereinander.

Dies stellt einen entscheidenden Unterschied zu den bisher bekannten Fördersystemen und deren Steuerungsarchitektur dar, denn diese bekannten Systeme umfassen zwar eine Kommunikationsschnittstelle zum Motorcontroller und eine Kommunikationsschnittstelle für die Kommunikation der Einzelfördermodule untereinander, aber keine zweite Kommunikationsebene für die Kommunikation der Einzelfördermodule untereinander.

Die Kommunikation zwischen den jeweiligen Einzelfördermodulen, d.h. mit anderen Worten die Kommunikation der Einzelfördermodule untereinander über die integrierten Steuereinheiten, wird erfindungsgemäß in zwei logischen Ebenen realisiert. Der Begriff der logischen (horizontalen) Kommunikationsebene lehnt sich in seiner Bedeutung im Rahmen der vorliegenden Erfindung an das ISO/OSI Referenzmodell für Netzwerkprotokolle als Schichtenarchitektur an. Die zwei logischen Ebenen können im ISO/OSI Modell parallel innerhalb einer Schicht angesiedelt sein. Beispiele für Protokolle, die an das ISO/OSI Referenzmodell angelehnt sind, sind u.a. CAN, Profinet, EtherCAT, Ethernet IP, usw.

Erfindungsgemäß werden die beiden logischen Kommunikationsebenen durch zwei voneinander getrennte und unabhängige Schnittstellensysteme realisiert. Beide Kommunikationsschnittstellen können parallel betrieben werden. Eine Ebene, beispielsweise die erste Ebene, dient im Rahmen der vorliegenden Erfindung bevorzugt auch der Layouterkennung und Konfiguration der Anlage und eine andere Ebene, beispielsweise die zweite Ebene, dient im Rahmen der vorliegenden Erfindung bevorzugt dem funktionalen Betrieb der Einzelfördermodule.

Beide Kommunikationsebenen (vorliegend synonym: Kommunikationssysteme) bzw. deren Verkabelungen, laufen bevorzugt stets parallel und gemeinsam mit dem mechanischen Aufbau der Einzelfördermodule zueinander.

Die Topologie des Materialflusses ist somit bei einem erfindungsgemäßen Fördersystem identisch zu der Topologie des Kommunikationsnetzwerks.

Die erfindungsgemäße Anordnung ermöglicht es, variabel sowohl große Fördersysteme mit vielen Einzelfördermodulen als auch kleine Fördersysteme mit wenigen Einzelfördermodulen derart zu steuern, dass eine Teil-dezentrale Steuerung ermöglicht wird. Aufgrund der zwei parallelen Kommunikationsebenen für die Kommunikation der Einzelfördermodule untereinander ist es erstmals möglich, dass Latenzen vollständig vermieden werden. Außerdem wird eine verbesserte Variabilität bei Änderungen bereitgestellt, um Änderungen schneller ausführen zu können und auch die Planungs- und Aufstellzeit insbesondere von großen Fördersystemen mit vielen Einzelfördermodulen zu verringern und den Prozess insgesamt zu vereinfachen.

Die Einzelfördermodul-Steuerungen können vorteilhafterweise beliebig verkabelt werden, auch in solchen Kombinationen, die für RealTime-Kommunikationsschnittstellen unvereinbar sind (z.B. Mesh- oder Ringtopologie). Diese Kombinationen können erfindungsgemäß während der Konfigurierung mit Hilfe der ersten Kommunikationsebene (d.h. des ersten Kommunikationssystems) erkannt werden. Die zweite Kommunikationsebene wird im Anschluss so konfiguriert (geschaltet), dass diese unvereinbaren Kombinationen gelöst werden.

Weiterhin vorteilhaft können die beiden Kommunikationsebenen nach der Konfiguration austauschbar benutzt werden. Somit können bei dem erfindungsgemäßen Fördersystem Statusmeldungen asynchron, d.h. nicht nur nacheinander bzw. rein zeitgesteuert, übergeben werden. Dies bringt eine erhebliche Variabilität und Effizienz in die Steuerungsfunktionalität und mithin in den übergeordneten Betrieb und in die Änderungsmöglichkeiten des Fördersystems.

In einer bevorzugten Ausgestaltung der Erfindung ist die Kommunikationseinheit derart ausgelegt, dass eine erste Kommunikationsebene zwischen den Einzelfördermodulen ein Kommunikationsprotokoll umfasst, welches nicht Echtzeit-fähig ist.

Erfindungsgemäß dient diese erste Kommunikationsebene auch zur Konfiguration des Fördersystems. Die Konfiguration des Fördersystems bzw. der Steuerung des Fördersystems schließt dabei auch die Erkennung des Layouts des Fördersystems ein.

In einer weiteren bevorzugten Ausgestaltung des erfindungsgemäßen Fördersystems ist die Kommunikationseinheit derart ausgelegt, dass eine zweite Kommunikationsebene zwischen den Einzelfördermodulen zur Steuerung der jeweiligen mindestens einen Fördereinrichtung vorgesehen ist, wobei die zweite Kommunikationsebene Echtzeit-fähig ausgelegt ist.

Ein erstes Einzelfördermodul steuert somit über die zweite Kommunikationsebene ein zweites Einzelfördermodul, welches bevorzugt benachbart zum ersten Einzelfördermodul in dem Fördersystem angeordnet ist. Mit anderen Worten ist es eine primäre Funktion der zweiten Kommunikationsebene, die Abstimmung der Abläufe innerhalb eines Förderweges vorzunehmen und sicherzustellen. Über die zweite Kommunikationsebene findet somit die Kommunikation jeder Förderabschnittseinrichtung, bzw. mit jedem Einzelfördermodul, mit jeder anderen und/oder zugleich mit übergeordneten Schnittstellen, bspw. mit der Zentralsteuerung, statt.

Auf diese Weise kann eine echtzeit-fähige Linie der Kommunikation zwischen den Einzelfördermodulen und/oder mit der Zentralsteuerung aufgebaut werden. Eine Verkabelung eines jeden einzelnen der Einzelfördermodule mit der Zentralsteuerung und ggf. jedem anderen Einzelfördermodul entfällt. Dies vereinfacht nicht nur den Aufbau sondern ermöglicht auch ein schnelles Erkennen und Austauschen von defekten Einzelfördermodulen. Zudem ermöglicht das erfindungsgemäße System auch eine Erweiterung beziehungsweise Ergänzung mit zusätzlichen Einzelfördermodulen, ohne dass neue Kabelverbindungen durch die gesamte Anlage gezogen werden müssen.

In einem weiteren Aspekt der vorliegenden Erfindung ist es zudem möglich, überhaupt keine zentrale Steuerung des Fördersystems mehr vorzusehen und die Steuerung des Fördersystems dezentral über die integrierten Steuerungen der Einzelfördermodule zu realisieren.

Hierdurch kann die Flexibilität und Variabilität des erfindungsgemäßen Fördersystems nochmals gesteigert werden. Im Übrigen können auf diese Weise Fördersysteme sehr schnell und Ressourcen-sparend geplant und aufgestellt werden.

In einer weiteren Ausgestaltung der Erfindung sind beide Kommunikationsebenen im Betrieb des Systems parallel betreibbar.

Als Schnittstelle für die erste Kommunikationsebene ist bevorzugt eine serielle Schnittstelle, zum Beispiel eine UART-Schnittstelle, und/oder eine Ethernet-Schnittstelle und/oder eine Mesh-fähige Schnittstelle vorgesehen.

Eine serielle Schnittstelle, zum Beispiel eine UART-Schnittstelle, dient zum Senden und Empfangen von Daten über eine Datenleitung und bildet den Standard der seriellen Schnittstellen an PCs und Mikrocontrollern. Auch im industriellen Bereich ist die Schnittstelle mit verschiedenen Standards wie zum Beispiel RS-232 oder EIA-485 sehr verbreitet.

Es stehen für eine Mesh-fähige Schnittstelle insbesondere auch Funkprotokolle zur Verfügung. Derzeit sind vor Allem Zigbee, Z-Wave und proprietäre Funktechniken vorherrschend, andere wie Thread und Bluetooth Mesh sind neu auf dem Markt. Zwar sind auch Bluetooth Low Energy und WiFi einsetzbar, doch sie unterstützen keine vermaschten Netzwerke.

Als Schnittstelle für die zweite Kommunikationsebene ist bevorzugt eine BUS-Schnittstelle, und/oder eine Ethernet-basierte Schnittstelle und/oder eine Linie-, Stern- und/oder Ring-Topologie vorgesehen.

Beispiele für BUS-Schnittstellen sind unter anderem CAN und Profi-BUS. Beispiele für Ethernet-basierte Schnittstellen sind unter anderem Profinet, EtherCAT, Ethernet IP, usw.

Es können auch andere Topologien vorgesehen werden, je nach Anforderung des System-Layouts.

In einer weiteren Ausführungsform der Erfindung umfasst die Kommunikationseinheit eines Einzelfördermoduls eine Pluralität von Anschlüssen, bevorzugt mit einer solchen Anzahl von Anschlüssen, die korrespondiert zu der Anzahl der Nachbar-Einzelfördermodule, mit denen das Einzelfördermodul kommuniziert.

Unter dem Begriff Nachbar-Einzelfördermodul werden im Sinne der vorliegenden Erfindung beispielsweise solche anderen Einzelfördermodule verstanden, die zu einem ersten Einzelfördermodul benachbart angeordnet sind und in der Lage sind, logistische Objekte an das erste Einzelfördermodul zu übergeben oder von diesem logistische Objekte zu empfangen.

Gleichermaßen ist es ebenso bevorzugt möglich, für jedes Einzelfördermodul unabhängig von der Anzahl seiner Nachbarn eine gleiche Anzahl Anschlüsse vorzugsehen, insbesondere eine Anzahl, die der höchsten Zahl möglicher Nachbarn in dem System entspricht. Nicht benötigte Anschlüsse werden dann entsprechend nicht belegt bzw. verbunden.

Auf diese Weise kann eine größtmögliche Variabilität der Einzelfördermodule erzielt werden und Umkonfigurationen des Fördersystems werden erleichtert.

Als Anschlüsse im Sinne der Erfindung werden nicht nur Kabelverbindungen sondern auch Steckverbindungen, Glasfaserverbindungen oder drahtlose Verbindungen, die optisch oder elektromagnetisch Daten übertragen, verstanden.

Da ein Einzelfördermodul mit mehreren benachbarten Modulen kommunikativ verbunden werden kann, entsteht eine vermaschte Topologie der Kommunikation, so dass ein bestimmtes Fördermodul über mehrere Wege mit Daten versorgt werden kann. Sollte die Datenübertragung über einen der Wege auf Grund eines Fehlers oder Störung unterbrochen werden, können die restlichen benachbarten Module über andere Wege weiter mit Daten versorgt werden. Dadurch kann die Robustheit der Gesamtanlage gegen Störungen weiter erhöht werden.

In einer weiteren Ausgestaltung des erfindungsgemäßen Fördersystems sind über die nicht Echtzeit-fähige Schnittstelle weitere Sensoren oder Aktoren an ein Einzelfördermodul anschließbar.

Im Sinne der vorliegenden Ausführungsform der Erfindung werden als weitere Sensoren oder Aktoren insbesondere externe Sensoren und Aktoren verstanden, die nicht Bestandteil des Einzelfördermoduls sind sondern nur an das Einzelfördermodul anschließbar. Gleichermaßen sind auch solche Sensoren oder Aktoren umfasst, die bereits werksseitig in das Einzelfördermodul eingebaut sind.

Weiterhin können über die nicht echtzeitfähige Schnittstelle externe Sensoren und Aktoren direkt an dem Einzelfördermodul angeschlossen werden. Die Signale der Sensoren oder Aktoren können direkt im Modul bearbeitet werden und es können einfache Entscheidungen getroffen werden. Ebenso ist es beispielweise möglich, das Signal des Sensors oder Aktors über eine der beiden Kommunikationsebenen an eine zentrale Steuerung und/oder an weitere Einzelfördermodule zur Weiterverarbeitung zu leiten.

Es ist darüber hinaus auch möglich, externe Sensoren oder Aktoren an die Echtzeit-fähige Schnittstelle anzuschließen.

In einer bevorzugten Ausgestaltung des erfindungsgemäßen Fördersystems erfolgt die Spannungsversorgung von einem Einzelfördermodul an benachbarte Einzelfördermodule mittels Kabel.

Die Spannungsversorgung kann auf diese Weise von einem Einzelfördermodul zum nächsten Einzelfördermodul durchgeschleift werden. Hierdurch kann eine erhebliche Reduktion der Verkabelung erzielt werden.

Da ein Einzelfördermodul mit mehreren benachbarten Modulen verbunden werden kann, entsteht eine vermaschte Topologie der Spannungsversorgung, so dass ein bestimmtes Einzelfördermodul über mehrere Wege mit Spannung versorgt werden kann. Sollte die Spannungsversorgung über einen der Wege auf Grund eines Fehlers oder einer Störung unterbrochen werden, können die restlichen benachbarten Module über andere Wege weiter mit Spannung versorgt werden. Dadurch kann die Robustheit der Gesamtanlage gegen Störungen weiter erhöht werden.

Die Spannungsversorgung der Module erfolgt üblicherweise über einen oder mehrere Anschlüsse. Die Anlage wird über ein öffentliches oder ein Industrienetz mit 230V bzw. 400V versorgt. Über Netzteile wird die Spannung heruntergeregelt. Zweckmäßig auf eine Spannung gleich oder kleiner als 60V, um im Bereich der Kleinspannung nach Maschinenrichtlinie zu bleiben. Bevorzugt werden 48V oder 24V verwendet, da sie in der Antriebstechnik verbreitet sind. Unter Berücksichtigung der Energiedichte, der elektrischen Sicherheit der Anlage und der technischen Realisierbarkeit der Anschlüsse sind 48V zu bevorzugen.

Die Eingangsspannung kann an einer beliebigen Stelle der Anlage des erfindungsgemäßen Fördersystems positioniert werden. Aufgrund des vermaschten Netzwerks der Spannungsversorgung können zudem weitere Eingänge an beliebigen Stellen der Anlage positioniert werden.

In einer weiteren Ausführungsform der Erfindung sind als Einzelfördermodule großskalige Einzelfördermodule, insbesondere Rollenförderer, Ausschleuser, Kurvenförderer oder Merger, und/oder kleinskalige Einzelfördermodule vorgesehen, insbesondere ein Zusammenschluss von einer Mehrzahl von Einzelfördermodulen.

Zu der Unterscheidung zwischen großskaligen und kleinskaligen Einzelfördermodulen wird vollumfänglich auf die weiter oben angegebene Beschreibung verwiesen.

Die Aufgabe wird ebenfalls gelöst durch ein Verfahren zur Steuerung von Fördersystemen umfassend mehrere Einzelfördermodule, wobei ein Einzelfördermodul mindestens eine Fördereinrichtung, mindestens einen Aktuator zum Antrieb der Fördereinrichtung und eine integrierte Steuereinheit umfasst, wobei die integrierte Steuereinheit eine Kommunikationseinheit aufweist, die die folgenden Schritte ausführt:
- Austauschen von Informationen mit einem Management-System, das die Logik des zu fördernden Materialablaufs beinhaltet,
- Bereitstellen einer ersten Kommunikationsebene zwischen den Einzelfördermodulen zur Konfiguration des Fördersystems mit einem Kommunikationsprotokoll, welches nicht Echtzeit-fähig ist, und
- Bereitstellen einer zweiten Kommunikationsebene zwischen den Einzelfördermodulen, die zur Steuerung der jeweiligen mindestens einen Fördereinrichtung vorgesehen ist, wobei die zweite Kommunikationsebene Echtzeit-fähig ausgelegt ist.

Das Layout des Fördersystems und somit die Topologie werden in dem erfindungsgemäßen Verfahren von der Kommunikationsebene K1 erkannt und darauf basierend wird die Kommunikationsebene K2 konfiguriert.

Gemäß des erfindungsgemäßen Verfahrens sind die beiden Kommunikationsebenen also zur Kommunikation der integrierten Steuereinheiten der Einzelfördermodule untereinander einerseits und gegebenenfalls zur Kommunikation der integrierten Steuereinheit des Einzelfördermoduls mit beispielsweise einer Zentralsteuerung oder einem zentralen Warehousemanagement-System ausgelegt. Hierunter ist jedoch die Kommunikation zu den Motorcontrollern, d.h. zu den Steuereinrichtungen der Aktuatoren für die Fördereinrichtungen wie zum Beispiel Rollen, nicht eingeschlossen. Diese Kommunikationsebene wird erfindungsgemäß als eine weitere, dritte Kommunikationsebene angesehen.

Dies stellt einen entscheidenden Unterschied zu den bisher bekannten Fördersystemen und deren Steuerungsarchitektur dar, denn diese bekannten Systeme umfassen zwar eine Kommunikationsschnittstelle zum Motorcontroller und eine Kommunikationsschnittstelle für die Kommunikation der Module untereinander, aber keine zweite Kommunikationsebene für die Kommunikation der Module untereinander.

Zusätzlich können die Signale über die beiden erfindungsgemäß vorgesehenen Kommunikationsebenen vorliegend bidirektional oder omnidirektional ausgetauscht werden, was mit den Kommunikationsebenen von bisher bekannten Fördersystemen nicht möglich war, da diese nur unidirektionale Signalübertragungen vorgesehen haben.

Selbstverständlich können beide Kommunikationsebenen gleichzeitig funktionieren. Dabei kann beispielweise für den Betrieb der Anlage die Echtzeitschnittstelle verwendet werden, während parallel über die nicht Echtzeit-Schnittstelle stets die Konsistenz des Layouts geprüft werden kann. Sollte ein Modul ausfallen, wird dies sofort detektiert. Die Anlage kann dann kontrolliert zu einem Stopp gebracht werden, ohne dass es zu einem sogenannten Crash, also einer Kollisionen zwischen Objekten und der Anlage, kommt.

In einer bevorzugten Ausführungsform des erfindungsgemäßen Verfahrens besteht die Kommunikation der ersten Ebene aus einem Protokoll, das ohne eine Vorkonfiguration oder Adressierung kommunizieren kann und insbesondere über eine Mesh-Topologie kommunizieren kann.

In einer weiteren bevorzugten Ausführungsform der Erfindung besteht die Kommunikation der zweiten Kommunikationsebene aus einem Protokoll, das über eine BUS-, Stern- oder Ring-Topologie kommunizieren kann, insbesondere ein CAN- oder CANopen-Protokoll oder ein Ethernet-basiertes Protokoll.

Weitere vorteilhafte Ausgestaltungen sind Gegenstand der abhängigen Ansprüche und der ausführlichen Beschreibung.

### Kurzdarstellung der Figuren

Nachfolgend wird die Erfindung näher unter Bezugnahme auf in den Figuren gezeigten beispielhaften Ausführungsformen erläutert. In diesen zeigt:
Fig. 1 jeweils eine stark schematisierte Darstellung einer Anordnung von Einzelfördermodulen unterschiedlicher Geometrie mit möglichen Kommunikationspfaden für die erste Kommunikationsebene gemäß einer beispielhaften Ausführungsform der Erfindung,
Fig. 2 eine stark schematisierte Darstellung von Einzelfördermodulen gemäß einer weiteren beispielhaften Ausführungsform der Erfindung,
Fig. 3 eine stark schematisierte Darstellung einer Anordnung von Einzelfördermodulen gleicher Geometrie mit möglichen Kommunikationspfaden für die zweite Kommunikationsebene gemäß einer beispielhaften Ausführungsform der Erfindung,
Fig. 4 eine stark schematisierte Darstellung einer beispielhaften Ausgestaltung der vorliegenden Erfindung,
Fig. 5 eine vergrößerte Detaildarstellung von zwei Einzelfördermodulen gemäß Figur 4,
Fig. 6 eine stark schematisierte Darstellung eines erfindungsgemäßen Fördersystems gemäß einer weiteren beispielhaften Ausgestaltung, und
Fig. 7 eine stark schematisierte Darstellung eines erfindungsgemäßen Fördersystems gemäß einer weiteren beispielhaften Ausgestaltung.

### Detaillierte Beschreibung

Nachfolgend wird die Erfindung eingehender unter Bezugnahme auf die Figur dargestellt werden. Dabei ist anzumerken, dass unterschiedliche Aspekte beschrieben werden, die jeweils einzeln oder in Kombination zum Einsatz kommen können, d.h. jeglicher Aspekt kann mit unterschiedlichen Ausführungsformen der Erfindung verwendet werden, soweit nicht explizit als reine Alternative dargestellt.

Weiterhin wird nachfolgend der Einfachheit halber in aller Regel immer nur auf eine Entität Bezug genommen werden. Soweit nicht explizit vermerkt, kann die Erfindung aber auch jeweils mehrere der betroffenen Entitäten aufweisen. Insofern ist die Verwendung der Wörter "ein", "eine" und "eines" nur als Hinweis darauf zu verstehen, dass in einer einfachen Ausführungsform zumindest eine Entität verwendet wird.

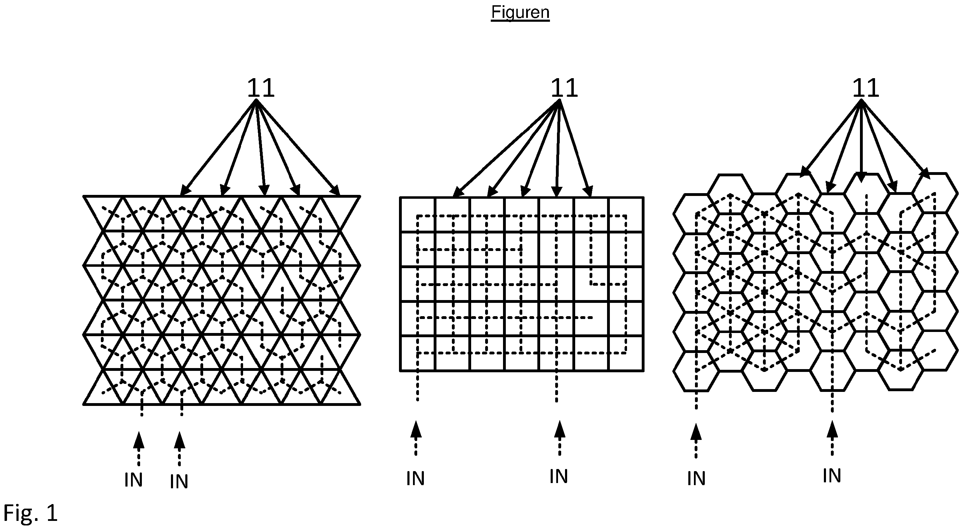

In den in der Figur 1 stark schematisiert gezeigten Anordnungen von Einzelfördermodulen 11 unterschiedlicher Geometrie werden jeweils mögliche Kommunikationspfade für die erste Kommunikationsebene K1 gemäß einer beispielhaften Ausführungsform der Erfindung dargestellt. Die kleinskaligen Einzelfördermodule 11 haben jeweils eine identische Geometrie, welche dreieckig, quadratisch oder sechseckig ist und welche derart zu einem (Teil-)-Fördersystem 10 verbunden sind, dass sie eine vollständig geschlossene Fläche bilden (sogenannte platonische Parkettierung). Die Strichlinien zeigen die Topologie der Kommunikation der ersten Kommunikationsebene K1 der Einzelfördermodule 11 untereinander gemäß der vorliegenden Erfindung auf.

Die erste Ebene K1 besteht aus einem Kommunikationsprotokoll, das ohne eine Vorkonfiguration oder Adressierung kommunizieren kann. Die Kommunikation in beliebigen Topologien (Linien, Stern, Ring, Baum, Mesh, usw) sollte jedoch möglich sein. Dieses Protokoll muss nicht echtzeit-fähig sein. Dieses kann beispielsweise seriell, Ethernet u.a. sein. Jeweils auf der linken Seite der dargestellten Anordnung von Einzelfördermodulen 11 sind die Module mit allen Nachbarn verbunden. Auf der jeweiligen rechten Seite der Darstellung sind die Module dagegen nur mit einigen Nachbarn verbunden.

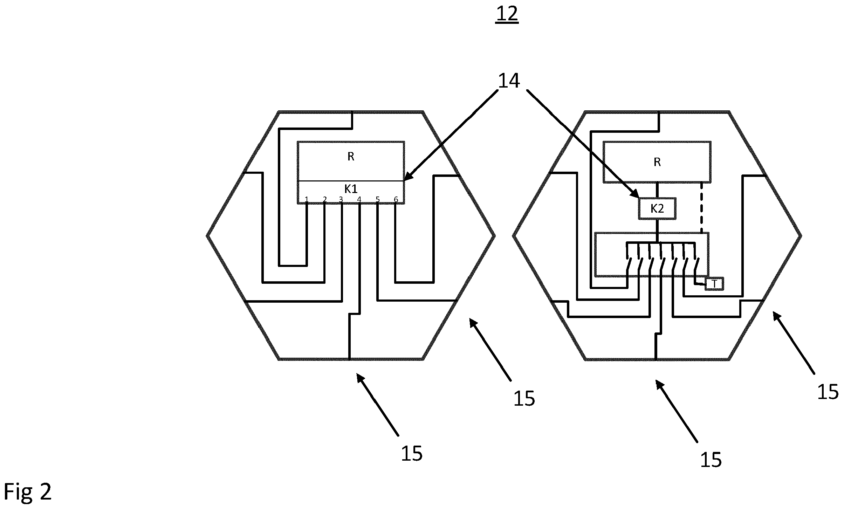

In Figur 2 ist eine stark schematisierte Darstellung von Einzelfördermodulen 11 gemäß einer weiteren beispielhaften Ausführungsform der Erfindung gezeigt. Die sechseckigen Einzelfördermodule 11 weisen mehrere Anschlüsse 15 für die erste Kommunikationsebene, in der linken Darstellung gezeigt, und für die zweite Kommunikationsebene, in der rechten Darstellung gezeigt, auf und sie können mit mehreren Nachbarmodulen kommunizieren. Die Anschlüsse 15 sind mit der Recheneinheit, welche Bestandteil der Steuereinheit 12 ist, verbunden. Somit können die Fördermodule 11 stets mit allen Nachbarn Informationen tauschen.

Die Darstellungen in Figur 2 zeigen die Anordnung der Kommunikationseinheit 14 in der Steuereinheit 12 des Einzelfördermoduls 11 mit den zwei Kommunikationsebenen. Hierbei ist
- R: Recheneinheit,
- K1: Erste Kommunikationsebene,
- 1-6: Kommunikationsports der ersten Kommunikationsebene,
- K2: Zweite Kommunikationsebene, und
- T: Terminal oder Endwiderstand.

Manche BUS-Systeme (bspw. CAN) können einen Widerstand am Ende der BUS Linie benötigen. Ethernet-Systeme benötigen zum Beispiel keinen solchen Widerstand.

Die Daten, die über die erste Kommunikationsebene K1 laufen, werden von der Recheneinheit R bearbeitet und ggf. weitergeleitet. Da die Recheneinheit zyklisch bzw. getaktet arbeitet, kann sie aber nur eine Nachricht auf einmal bearbeiten. Also muss die Nachricht bearbeitet werden, bevor sie weitergeleitet werden kann. Dadurch entsteht eine nichtdeterministische Zeitverzögerung zwischen Empfang und Weiterleitung an einen beliebigen Nachbar.

Dabei sollte also bevorzugt beachtet werden, dass veraltete Telegramme nicht im System bleiben, da sonst die Leitung schnell überlastet werden kann. Da jeder Anschluss 15 mit der Recheneinheit der Steuereinheit 12 des Einzelfördermoduls 11 verbunden ist, kann hier jedes Telegramm auf Relevanz geprüft werden. Dabei wird die Nachricht empfangen und von der Recheneinheit überprüft. Sollte die Information neu sein, wird diese vom Modul bearbeitet und ggf. an die restlichen Anschlüsse 15 weitergeleitet. Sollte jedoch die Information nicht relevant sein, also veraltet oder bereits empfangen worden sein, wird das Telegramm gelöscht. Dadurch kann sichergestellt werden, dass nur relevante Informationen im System bleiben. Diese Art der Kommunikation hat den Vorteil, dass alle Module 11 miteinander trotz Mesh-Topologie kommunizieren können. Da die Recheneinheit zyklisch bzw. getaktet arbeitet, kann sie aber nur eine Nachricht auf einmal bearbeiten. Also muss die Nachricht bearbeitet werden, bevor sie weitergeleitet werden kann. Dadurch entsteht eine nichtdeterministische Zeitverzögerung zwischen Empfang und Weiterleitung an einem beliebigen Nachbar. Bei vielen Übertragungen kann schnell die Verzögerung unzulässige Bereiche erreichen. Also ist eine solche nicht-echtzeitfähige Schnittstelle ungeeignet für die Kommunikation des Betriebs der Einzelfördermodule 11 untereinander innerhalb von Topologien, die zahlreichen Knoten haben.

Die Schnittstellen der ersten Kommunikationsebene K1 bieten dennoch einen entscheidenden Vorteil. Mit einem geeigneten Verfahren, bei dem jedes Fördermodul 11 seine eigene Identifikation mit den Nachbarn austauscht, kann die Topologie des Kommunikationsnetzwerks und somit des Materialflussnetzwerks eindeutig abgebildet werden. Dieser Prozess ist nicht zeitkritisch, da es insbesondere einmalig bei der Inbetriebnahme der Anlage stattfindet. Aus den vorstehenden Gründen eignet sich daher erfindungsgemäß eine nicht-echtzeitfähige Kommunikation K1 für die Erkennung der Topologie und für die Konfiguration von einer weiteren (zweiten) Kommunikationsebene K2.

Für die automatische Bestimmung des Layouts und somit der Topologie des Fördersystems wird ein Koordinatensystem, beispielsweise ein modifiziertes kartesisches Koordinatensystem, definiert, mit dem jedem einzelnen Fördermodul eine eindeutige und einmalige Koordinate zugewiesen wird, die zugleich als ein Fördermodulidentifikator dient. Dieser Identifikator muss nicht im Voraus in der Steuereinheit des Fördermoduls gespeichert sein, sodass keine "Default-adresse" oder vorkonfigurierte Adresse besteht. Der Identifikator wird vielmehr während der Selbstkonfiguration generiert. Bei fördertechnischen Anlagen, die nur eine Linie bilden, kann das Koordinatensystem unidimensional sein. Da fördertechnische Anlagen jedoch Abzweigungen, Loops, Zusammenführungen, Kreuzungen, usw. beinhalten, ist ein mehrdimensionales Koordinatensystem bevorzugt. Je nach Eigenschaften des Fördersystems kann das Koordinatensystem auf eine weitere Art (z.B. axiales, kubisches, offset, Polarkoordinatensystem) umgestellt werden. Das Koordinatensystem kann auch gewechselt werden, nachdem die Konfiguration realisiert wurde. Somit ist die Konfiguration also dynamisch.

Das Layout des Fördersystems und somit die Topologie werden von der Kommunikationsebene K1 erkannt und darauf basierend wird die Kommunikationsebene K2 konfiguriert. Das erste Fördermodul oder die Zentralsteuerung bekommt eine beliebige Koordinate. Das Fördermodul schickt an alle verfügbaren Kommunikationsports der ersten Kommunikationsebene eine Konfigurationsanfrage (Broadcast). Diese Anfrage beinhaltet unter anderem die eigene Koordinate sowie Informationen über den Fördermodultyp, die Geometrie des Fördermoduls sowie die Portnummer, über die die Kommunikationsanfrage geschickt wurde. Sollte an einem der Ports ein weiteres Fördermodul angeschlossen sein, wird diese Anfrage dort empfangen und bearbeitet. Das weitere Fördermodul, welches die Anfrage empfangen hat, berechnet auf Basis der empfangenen Informationen seine eigene Koordinate und schickt diese zusammen mit den Informationen beinhaltend den eigenen Fördermodultyp, Fördermodulgeometrie, technische Eigenschaften des Fördermoduls und die Portnummer über den Port, wo die Konfigurationsanfrage empfangen wurde, an die Steuerungseinheit des ersten Fördermoduls als eine Acknowledge-Nachricht zurück. Dadurch erkennt die Steuereinheit des ersten Fördermoduls, ob Fördermodule (bzw. Steuerungseinheiten) angeschlossen sind und an welchen Kommunikationsports diese angeschlossen sind. Nachdem die weitere Steuerungseinheit des nächsten Fördermoduls die Achknowledge-Nachricht zurückgeschickt hat, leitet sie die Konfigurationsanfrage an seinen freien Kommunikationsport weiter. Der Prozess wiederholt sich solange bis keine Bestätigungen mehr empfangen werden (also keine weiteren Nachbarfördermodule vorhanden). Dies bedeutet, dass alle Steuerungseinheiten der angeschlossenen Fördermodule mindestens einmal angesprochen wurden, sich konfiguriert haben und die Informationen über ihre u.a. eigenen Koordinaten im Koordinatensystem, Fördermodultyp und Fördermodulgeometrie sowie sonstige technischen Eigenschaften des Fördermoduls an die vorherige Steuerungseinheit, an die erste Steuerungseinheit oder gegebenenfalls an die Zentralsteuerung über ein sogenanntes Upload-Routing Verfahren weitergeleitet haben. Dadurch wird das Layout der Gesamtanlage erkannt und die jeweiligen Steuerungseinheiten und damit auch die jeweiligen Einzelfördermodule eindeutig identifiziert.

Es ist allgemein bekannt, dass BUS Systeme mehrere Topologien unterstützen (z.B. Linien, Ring, Stern, Baum, usw.) jedoch keine Mesh-Topologie unterstützen. Förderanlagen, d.h. Fördersysteme, können jedoch in beliebigen Topologien vorkommen, insbesondere in Mesh-Topologien. Um die zweite Kommunikationsebene zu konfigurieren, muss die Mesh-Topologie der Anlage in Subgruppen oder Subtopologien geteilt werden, die von einem Echtzeitkommunikationssystem unterstützt werden. Dafür wird das Layout der gesamten Förderanlage in eine der Steuerungseinheiten des ersten Fördermoduls oder in der Zentralsteuerung analysiert und Echtzeitkommunikations-geeigneten Subtopologien berechnet, mit denen die Gesamttopologie der Anlage abgebildet werden kann. Dies kann zum Beispiel eine oder mehrere logische BUS-Topologie oder eine Baum-Topologie sein, die zusammen ein physikalisches Mesh-Netzwerk aufbauen können. Mit dieser Information wird die zweite Kommunikationsebene K2 konfiguriert. Auf Basis der berechneten Subtopologie werden einzelne Befehle für die Rechnereinheiten der einzelnen Steuerungseinheiten der Fördermodule zur Konfiguration der zweiten Kommunikationsebene K2 generiert und über die erste Kommunikationsebene K1 geschickt. Da alle Fördermodule nun auf der ersten Kommunikationsebene K1 einen eindeutigen Identifikator haben, können diese Befehle gezielt (Non-Broadcast) an die betroffenen Fördermodule geschickt werden. Das Format der Befehle und/oder die Aktion, die in dem Befehl beinhaltet ist, kann sich je nach verwendeter Schnittstelle unterscheiden. Für EtherCAT z.B. kann das ein Befehl zum Einschalten/Ausschalten der EtherCAT ASIC Ports sein. Für CAN kann das ein Umschalten der Bus-switches sein. Mit dieser Methode kann in den meisten Fällen mindestens eine gültige einheitliche Topologie (also ohne Subtopologien) gefunden werden, mit dem die Gesamtanlage abgebildet werden kann. In den restlichen Fällen sind mehrere gültige Topologien möglich oder nötig. Diese Subtopologien können über einen Umweg über das erste Kommunikationssystem verbunden werden, sodass Nachrichten in diesem Fall von einer Subtopologie in eine anderen Subtopologie übertragen werden.

Die Fördermodule 11 können mit allen Nachbarn angeschlossen sein und somit Daten austauschen, sie müssen aber nicht mit allen Nachbarn für die erste Kommunikationsebene K1 verbunden sein. Figur 1 zeigt vorstehend sowohl die Topologie der ersten Kommunikationsebene K1, wenn alle Nachbarn miteinander verbunden sind (jeweils linke Seite) als auch wenn sie nur mit einigen Nachbarn verbunden sind (jeweils rechte Seite). Es ist zu beachten, dass diese erste Kommunikationsebene K1 mehrere Ein- und Ausgänge von Daten erlauben. Ebenso können die Module 11 einen einzigen Anschluss 15 besitzen, ohne dass die Topologie beschädigt wird und die Kommunikation gehindert wird. Die verschiedenen Topologien können für Fördermodule 11 mit beliebiger Geometrie verwendet werden.

Die zweite Kommunikationsebene K2 ist eine dezidierte Einheit, die selbst die Kommunikation übernimmt, wenn sie einmal konfiguriert ist. Während der Kommunikation über die zweite Kommunikationsebene K2 wird die Recheneinheit R somit nicht belastet. Die Kommunikation über die zweite Kommunikationsebene K2 ist deterministisch und echtzeitfähig. Sie ist daher sehr gut geeignet für die Kommunikation innerhalb knotenreicher Topologien. Herkömmliche Echtzeit-Schnittstellen unterstützen BUS-, Linie-, Stern-, und/oder Ring-Topologien usw. Sehr verbreitet sind Echtzeitprotokolle wie CAN, CANopen, Profinet, EtherCAT, usw. Sie unterstützen allerdings nur bspw. BUS- oder Baum-Topologien und können nicht in Mesh-Topologien kommunizieren, da dies eine unzulässige Topologie darstellt, die zu Kommunikationsfehlern führen kann. Da über die erste Kommunikationsebene K1 die Topologie des Fördersystems 10 bereits erkannt wurde, kann diese Information jedoch vorteilhafterweise benutzt werden um künstlich eine passende Topologie für die zweite Kommunikationsebene K2 zu bauen, sodass ein Standard-BUS- oder Ethernet-System verwendet werden kann.

In einer bevorzugten Ausführung der Erfindung besteht die zweite Kommunikationsebene K2 aus einer einzelnen CAN-Schnittstelle mit einem oder mehrere BUS-Switches pro Kommunikationseinheit. Der BUS-Switch ist mittels einer geeigneten Schnittstelle mit der Recheneinheit R verbunden (bspw.: i/o, SPI oder I2C). In jedem Modul 11 ist zudem ein Endwiderstand T (sog. BUS-Terminal) eingebaut, der ebenfalls an dem Bus-Switch angeschlossen ist.

Beim Einschalten des Moduls 11 ist die CAN-Schnittstelle von allen Schaltern des BUS-Switch getrennt. Jedes Modul 11 bekommt eine Nachricht über die erste Kommunikationsebene K1 für die Konfiguration der zweiten Kommunikationsebene K2. Diese beinhaltet u.a. ein Paar von Schaltern im BUS-Switch, die geschlossen werden sollen. Die Transistoren des BUS-Switches werden eingeschaltet und die Linientopologie des BUS wird aufgebaut. Das letzte Modul 11 im BUS bekommt nur einen Eingang und sein Ausgang wird an einen BUS-Terminal T geschaltet.

In einer weiteren bevorzugten Ausführung besteht die zweite Kommunikationsebene K2 einer Steuereinheit aus einer einzelnen EtherCAT-Schnittstelle mit einer EtherCAT ASIC mit einem oder mehreren Kommunikationsports pro Kommunikationseinheit. Die ASIC ist mittels einer geeigneten Schnittstelle mit der Recheneinheit R verbunden (bspw.: i/o, SPI oder I2C).

Beim Einschalten des Moduls 11 ist die EtherCAT-Schnittstelle durch Deaktivierung der EtherCAT ASIC deaktiviert. Jedes Modul 11 bekommt eine Nachricht über die erste Kommunikationsebene K1 für die Konfiguration der zweiten Kommunikationsebene K2. Diese beinhaltet u.a. die EtherCAT ASIC Kommunikationsports, die den Status "open" haben sollen um eine passende Topologie aufzubauen.

Die "Linie" für die Konfiguration des BUS kann entweder per Hand oder automatisch generiert werden. Da die Topologie des (Teil-) Fördersystems 10 bereits bekannt ist, kann für die automatische Generierung der Linie ein beliebiger Suchalgorithmus für eine informierte Suche verwendet werden. Beispiele hierfür sind A-Stern, Dijkstra.

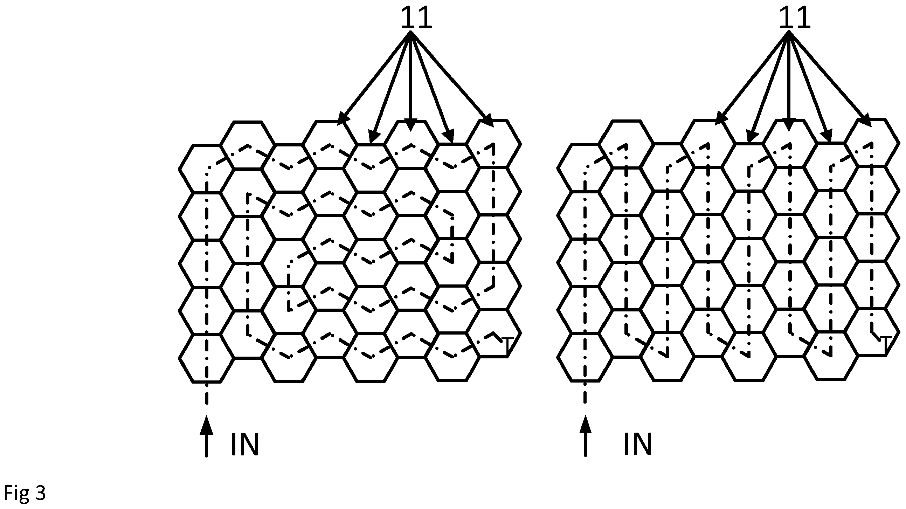

In der Figur 3 werden alternative Topologien für die BUS-Linie der zweiten Kommunikationsebene K2 mit mehreren Einzelfördermodulen 11 gezeigt. Am Ende wird der "Terminal" T automatisch mit dem BUS-Schalter angeschlossen.

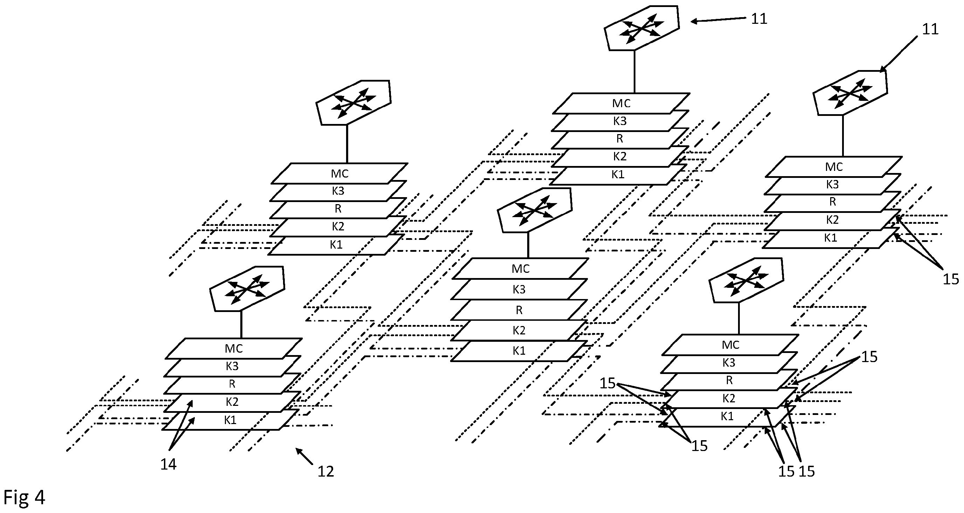

In Figur 4 ist in einer stark schematisierten Darstellung ein Ausführungsbeispiel eines erfindungsgemäßen Fördersystems 10 mit sechseckigen Einzelfördermodulen 11 gezeigt. Jedes Fördermodul 11 umfasst eine Fördereinrichtung 13, welche mit Richtungspfeilen angegeben ist. Die Fördereinrichtung 13 wird von einem nicht dargestellten Motor als Ausführungsbespiel für einen Aktuator zum Antrieb der Fördereinrichtung angetrieben. Der Motor wird von einem Motorcontroller MC gesteuert. Ein solcher Motorcontroller ist ein Beispiel für eine Leistungseinheit zur Steuerung des Aktuators. Über eine Kommunikationsschnittstelle K3 erhält der Motorcontroller MC Daten von der Steuereinheit 12. Die Schnittstelle K3 zur Kommunikation der Steuereinheit 12 mit dem Motorcontroller MC kann eine Standardschnittstelle sein, beispielsweise eine Ethernet-, Feldbus-, USB-, Seriell-, i2C-, usw. oder eine klassische I/O-Schnittstelle sein.

Es wird betont, dass diese Schnittstelle K3 nicht zu den zwei, insbesondere unterschiedlichen, logischen Kommunikationsebenen für die Kommunikation der Einzelfördermodule untereinander, welche hier im Schaubild mit K1 und K2 gekennzeichnet sind, zählt. Denn die Schnittstelle K3 wird nicht und kann nicht für die Kommunikation der Einzelfördermodule 11 untereinander verwendet werden.

Dies stellt einen entscheidenden Unterschied zu den bisher bekannten Fördersystemen und deren Steuerungsarchitektur dar, denn diese bekannten Systeme umfassen zwar eine Kommunikationsschnittstelle K3 zum Motorcontroller und eine Kommunikationsschnittstelle für die Kommunikation der Module untereinander, aber keine zweite Kommunikationsebene für die Kommunikation der Module untereinander.

Die Kommunikationsschnittstelle K3 wird von der Recheneinheit R mit den entsprechenden Steuerungsdaten für die Motorsteuerung versorgt. Mit der Recheneinheit R sind erfindungsgemäß zwei, insbesondere zwei unterschiedliche, Kommunikationsebenen K1 und K2 verbunden, die jeweils für die Kommunikation der Einzelfördermodule untereinander sorgen. Hierbei kann für eine erste Kommunikationsebene K1 ein nicht-echtzeitfähiges Protokoll vorsehen sein. Diese erste Kommunikationsebene K1 wird vornehmlich für die Erkennung und Konfiguration der Topologie des Fördersystems 10 eingesetzt.

Die zweite Kommunikationsebene K2 ist wie vorstehend für die Figur 2 beschrieben ausgelegt.

Die erfindungsgemäße Anordnung und das hiermit durchführbare Verfahren funktionieren nicht nur mit kleinskaligen Fördermodulen sondern auch mit großskaligen Fördermodulen, jeweils mit beliebiger Geometrie, Funktion und Anzahl an Anschlüssen. Sie funktionieren ebenfalls mit einer Kombination von groß- und kleinskaligen Fördermodulen. So können beliebig komplexe Topologie erkannt werden sowie eine Echtzeitkommunikation zwischen den Modulen ermöglicht werden.

Die erfindungsgemäße Anordnung ermöglicht es, variabel sowohl große Fördersysteme mit vielen Einzelfördermodulen als auch kleine Fördersysteme mit wenigen Einzelfördermodulen derart zu steuern, dass eine Teil-dezentrale Steuerung ermöglicht wird. Aufgrund der zwei parallelen Kommunikationsebenen für die Kommunikation der Einzelfördermodule untereinander ist es erstmals möglich, dass Latenzen vollständig vermieden werden. Außerdem wird eine verbesserte Variabilität bei Änderungen bereitgestellt, um Änderungen schneller ausführen zu können und auch die Planungs- und Aufstellzeit insbesondere von großen Fördersystemen mit vielen Einzelfördermodulen zu verringern und den Prozess insgesamt zu vereinfachen.

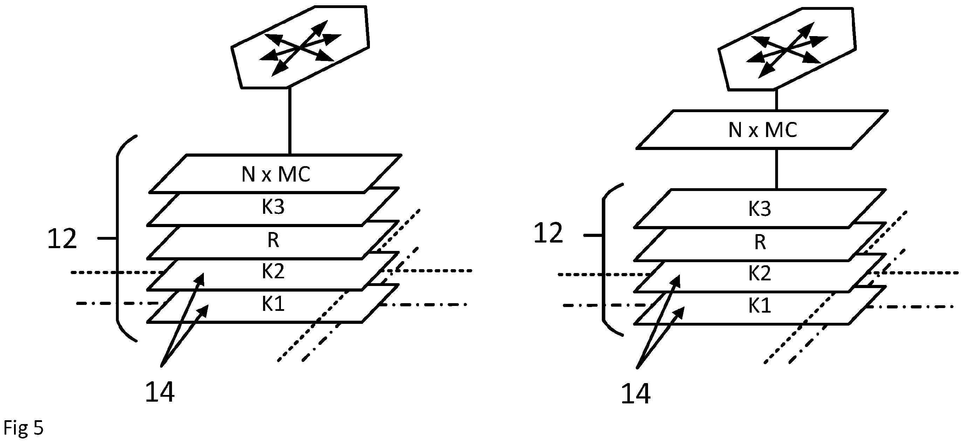

In Figur 5 sind Einzelfördermodule 11 eines erfindungsgemäßen Fördersystems 10 in zwei verschiedenen Varianten gezeigt. Die Einzelfördermodule weisen wie in Figur 4 die Komponenten mindestens einer Fördereinrichtung, welche mit Richtungspfeilen gekennzeichnet ist, und einer Steuereinheit 12 auf. In der linken Abbildung ist eine Variante dargestellt, in der neben den beiden Kommunikationsebenen K1 und K2, welche wie vorstehend beschrieben definiert sind und mit 14 bezeichnet, und der Recheneinheit R auch der oder die Motorcontroller MC zur Steuerung der Fördereinrichtung(en) in die Steuereinheit 12 integriert ist. In der rechten Abbildung ist dagegen eine Variante gezeigt, in der die Steuereinheit 12 den oder die Motorcontroller MC zur Steuerung der Fördereinrichtung(en) nicht enthält sondern diese separat im Einzelfördermodul vorgesehen sind.

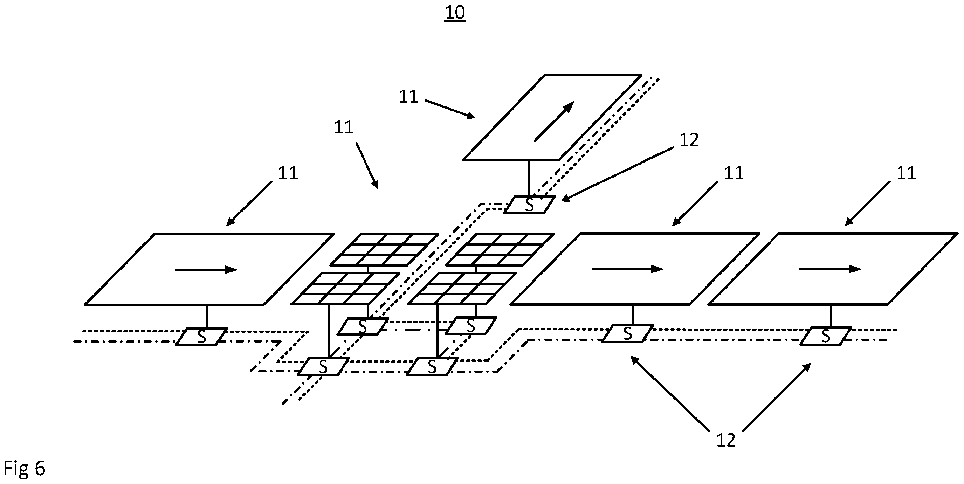

Figur 6 zeigt in einer stark schematisierten Darstellung ein weiteres Ausführungsbeispiel für ein erfindungsgemäßes Fördersystem mit großskaligen und kleinskaligen Einzelfördermodulen 11. In der hier gezeigten Ausführungsform sind die kleinskaligen Einzelfördermodule 11 zu Clustern zusammengefasst.

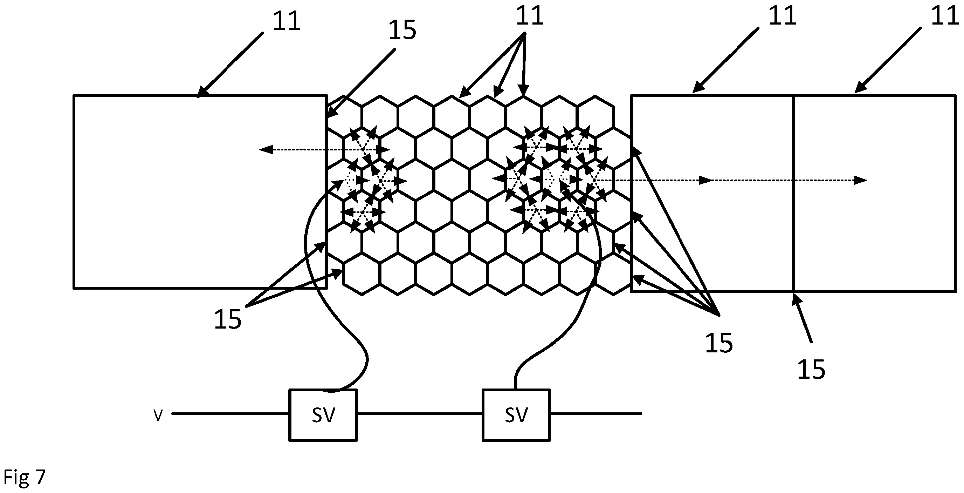

In Figur 7 ist in einer stark schematisierten Darstellung eine weitere Variante eines erfindungsgemäße Fördersystems 10 gezeigt. Sowohl großskalige Einzelfördermodule 11 als auch zu einer einheitlichen Förderfläche zusammen angeordnete kleinskalige Einzelfördermodule 11 sind Bestandteile des Fördersystems 10. Mit Richtungspfeilen sind die Übertragungen und Verbindungen der Spannungsversorgung angedeutet. Insbesondere an den Übergangsstellen zwischen den Einzelfördermodulen sind Anschlüsse 15 vorgesehen, die eine Kommunikationsverbindung in zwei Ebenen wie vorstehend in den Figuren 2, 4, 5 und 6 gezeigt herstellen. Daneben ist eine äußere Spannungsversorgung SV vorgesehen, die zumindest teil-dezentral die Einzelmodule 11 mit Spannung versorgt. Eine solche Spannungsversorgung SV schließt auch ein, dass nicht für jedes Einzelfördermodul ein Netzteil oder Wandler eingesetzt wird, sondern dass es auch möglich ist, die Spannungszufuhr von einem Einzelfördermodul 11 zum nächsten Einzelfördermodul 11 mit einer einfachen Kabelverbindung oder einer Steckverbindung durchzuschleifen. Die Figur 7 zeigt somit auch eine beispielhafte Verteilung des Stroms im System.

Für die Verbindung zwischen den Einzelfördermodulen 11 kann bevorzugt ein einzigen Stecker 15 benutzt werden. Der Stecker 15 umfasst mehrere Pins, die sowohl Strom als auch die Daten für die Kommunikation leiten.

Mit einem einzigen Stecker ist das Anschließen der Einzelfördermodule 11 an das Fördersystem 10 einfacher als bei herkömmlicher Systemen. Die bisher bekannten Förderanlagen sehen mindestens zwei Stecker vor, wobei ein Stecker für die Stromversorgung und ein separater Stecker für Kommunikation verwendet wird.

Hierdurch kann also erfindungsgemäß ein erheblicher Aufwand bei der Verkabelung der Einzelfördermodule eingespart werden.

## Patentansprüche

1. Modulares Fördersystem (10) umfassend mehrere Einzelfördermodule (11), wobei ein Einzelfördermodul (11)
- mindestens eine Fördereinrichtung (13),
- mindestens eine Spannungsversorgung,
- mindestens einen Aktuator zum Antrieb der Fördereinrichtung (13),
- eine Leistungseinheit für die Steuerung des Aktuators (MC) und
- eine integrierte Steuereinheit (12) umfasst,
wobei die integrierte Steuereinheit (12) eine Recheneinheit für die Bearbeitung von Informationen, und eine Kommunikationseinheit (14) aufweist, und wobei die Kommunikationseinheit (14) ausgelegt ist, die Kommunikation der Einzelfördermodule (11) einerseits mit einer Zentralsteuerung und/oder andererseits die Kommunikation der Einzelfördermodule (11) untereinander durchzuführen, **dadurch gekennzeichnet, dass** die Kommunikation der Einzelfördermodule (11) untereinander in zwei logischen Kommunikationsebenen (K1, K2) durch zwei voneinander getrennte und unabhängige Kommunikationsschnittstellen realisiert wird und eine Kommunikationsebene (K1) der Layouterkennung und Konfiguration des Fördersystems (10) dient.

2. Fördersystem (10) nach Anspruch 1, wobei die Topologie des Materialflusses bei dem Fördersystem identisch ist zu der Topologie des Kommunikationsnetzwerks, das aus der Zentralsteuerung und/oder den Kommunikationseinheiten (14) der Einzelfördermodule (11) gebildet wird.

3. Fördersystem (10) nach einem der vorhergehenden Ansprüche, wobei die Kommunikationseinheit (14) derart ausgelegt ist, dass eine erste Kommunikationsebene zwischen den Einzelfördermodulen (11) ein Kommunikationsprotokoll umfasst, welches nicht Echtzeit-fähig ist.

4. Fördersystem (10) nach einem der vorhergehenden Ansprüche, wobei die Kommunikationseinheit (14) derart ausgelegt ist, dass eine zweite Kommunikationsebene zwischen den Einzelfördermodulen (11) zur Steuerung der jeweiligen mindestens einen Fördereinrichtung (13) vorgesehen ist, wobei die zweite Kommunikationsebene Echtzeit-fähig ausgelegt ist.

5. Fördersystem (10) nach einem der vorhergehenden Ansprüche, wobei beide Kommunikationsebenen im Betrieb des Systems (10) parallel betreibbar sind.

6. Fördersystem (10) nach einem der vorhergehenden Ansprüche, wobei als Schnittstelle für die erste Kommunikationsebene eine Mesh-fähige Schnittstelle und/oder eine serielle Schnittstelle und/oder eine Ethernet-Schnittstelle vorgesehen ist.

7. Fördersystem (10) nach einem der vorhergehenden Ansprüche, wobei als Schnittstelle für die zweite Kommunikationsebene eine BUS-Schnittstelle, und/oder eine Ethernet-basierte Schnittstelle und/oder eine Linie-, Stern- und/oder Ring-Topologie vorgesehen ist.

8. Fördersystem (10) nach einem der vorhergehenden Ansprüche, wobei die Kommunikationseinheit (14) eines Einzelfördermoduls (11) eine Pluralität von Anschlüssen (15) mit einer solchen Anzahl von Anschlüssen (15) umfasst, die korrespondiert zu der Anzahl der Nachbar-Einzelfördermodule (11), mit denen das Einzelfördermodul (11) kommuniziert.

9. Fördersystem (10) nach einem der vorhergehenden Ansprüche, wobei die Kommunikationseinheit (14) eines jeden Einzelfördermoduls (11) eine Pluralität von Anschlüssen (15) mit einer solchen Anzahl von Anschlüssen (15) umfasst, die korrespondiert zu der größten Anzahl von Nachbar-Einzelfördermodulen (11).

10. Fördersystem (10) nach einem der vorhergehenden Ansprüche, wobei über die nicht Echtzeit-fähige Schnittstelle weitere Sensoren oder Aktoren an ein Einzelfördermodul (11) anschließbar sind.

11. Fördersystem (10) nach einem der vorhergehenden Ansprüche, wobei die Spannungsversorgung von einem Einzelfördermodul (11) an benachbarte Einzelfördermodule (11) mittels Kabel erfolgt.

12. Fördersystem (10) nach einem der vorhergehenden Ansprüche, wobei als Einzelfördermodule (11) großskalige Einzelfördermodule, oder Rollenförderer, Ausschleuser, Kurvenförderer oder Merger, und/oder kleinskalige Einzelfördermodule, oder ein Zusammenschluss von einer Mehrzahl von Einzelfördermodulen, vorgesehen sind.

13. Verfahren zur Steuerung von Fördersystemen (10) umfassend mehrere Einzelfördermodule (11), wobei ein Einzelfördermodul (11) mindestens eine Fördereinrichtung (13), mindestens einen Aktuator zum Antrieb der Fördereinrichtung (13) und eine integrierte Steuereinheit (12) umfasst, wobei die integrierte Steuereinheit (12) eine Kommunikationseinheit (14) aufweist, die die folgenden Schritte ausführt:
- Austauschen von Informationen mit einem Management-System, das die Logik des zu fördernden Materialablaufs beinhaltet,
- Bereitstellen einer ersten Kommunikationsebene (K1) zwischen den Einzelfördermodulen (11) zur Konfiguration des Fördersystems (10) mit einem Kommunikationsprotokoll, welches nicht Echtzeit-fähig ist, und
- Bereitstellen einer zweiten Kommunikationsebene (K2) zwischen den Einzelfördermodulen (11) zur Steuerung der jeweiligen mindestens einen Fördereinrichtung (13) vorgesehen ist, wobei die zweite Kommunikationsebene Echtzeit-fähig ausgelegt ist, **dadurch gekennzeichnet, dass**
das Layout des Fördersystems und somit die Topologie von der Kommunikationsebene K1 erkannt werden und darauf basierend die Kommunikationsebene K2 konfiguriert wird.

14. Verfahren nach Anspruch 13 wobei die Kommunikation der ersten Ebene (K1) aus einem Protokoll besteht, das ohne eine Vorkonfiguration oder Adressierung kommunizieren kann.

15. Verfahren nach einem der Ansprüche 13 bis 14, wobei die Kommunikation der zweiten Kommunikationsebene (K2) aus einem Protokoll besteht, das über eine BUS-, Linie-, Stern- oder Ring-Topologie kommunizieren kann, bevorzugt ein CAN- oder CANopen- oder ein Ethernet-basiertes Protokoll.

## Claims

1. A modular conveyor system (10) comprising a plurality of individual conveyor modules (11), wherein an individual conveyor module (11) comprises
- at least one conveyor device (13),
- at least one power supply,
- at least one actuator for driving the conveyor device (13),
- a power unit for the control of the actuator (MC) and
- an integrated control unit (12),
wherein the integrated control unit (12) has a computing unit for processing information, and a communication unit (14), and wherein the communication unit (14) is designed to carry out the communication of the individual conveyor modules (11) with a central control on the one hand and/or the communication of the individual conveyor modules (11) with one another on the other hand, **characterised in that** the communication of the individual conveyor modules (11) with one another is implemented in two logical communication levels (K1, K2) by means of two communication interfaces which are separate and independent of one another, and one communication level (K1) is used for layout recognition and configuration of the conveyor system (10).

2. Conveyor system (10) according to claim 1, wherein the topology of the material flow in the conveyor system is identical to the topology of the communication network formed by the central control and/or the communication units (14) of the individual conveyor modules (11).

3. Conveyor system (10) according to any one of the preceding claims, wherein the communication unit (14) is designed such that a first communication level between the individual conveyor modules (11) comprises a communication protocol which is not real-time capable.

4. Conveyor system (10) according to one of the preceding claims, wherein the communication unit (14) is designed such that a second communication level is provided between the individual conveyor modules (11) for controlling the respective at least one conveyor device (13), wherein the second communication level is designed to be real-time capable.

5. Conveyor system (10) according to any one of the preceding claims, wherein both communication levels are operable in parallel during operation of the system (10).

6. Conveyor system (10) according to one of the preceding claims, wherein a mesh-capable interface and/or a serial interface and/or an Ethernet interface is provided as interface for the first communication level.

7. Conveyor system (10) according to one of the preceding claims, wherein a BUS interface, and/or an Ethernet-based interface and/or a line, star and/or ring topology is provided as the interface for the second communication level.

8. Conveyor system (10) according to any one of the preceding claims, wherein the communication unit (14) of an individual conveyor module (11) comprises a plurality of connections (15) with such a number of connections (15) that corresponds to the number of neighbouring single conveyor modules (11) with which the single conveyor module (11) communicates.

9. Conveyor system (10) according to any one of the preceding claims, wherein the communication unit (14) of each individual conveyor module (11) comprises a plurality of connections (15) with such a number of connections (15) that corresponds to the largest number of neighbouring individual conveyor modules (11).

10. Conveyor system (10) according to one of the preceding claims, wherein further sensors or actuators can be connected to an individual conveyor module (11) via the non-real-time-capable interface.

11. Conveyor system (10) according to one of the preceding claims, wherein the power supply from an individual conveyor module (11) to adjacent individual conveyor modules (11) takes place by means of cables.

12. Conveyor system (10) according to one of the preceding claims, wherein large-scale individual conveyor modules, or roller conveyors, diverters, curve conveyors or mergers, and/or small-scale individual conveyor modules, or a combination of a plurality of individual conveyor modules, are provided as individual conveyor modules (11).

13. Method for controlling conveyor systems (10) comprising a plurality of individual conveyor modules (11), wherein an individual conveyor module (11) comprises at least one conveyor device (13), at least one actuator for driving the conveyor device (13) and an integrated control unit (12), wherein the integrated control unit (12) has a communication unit (14) which carries out the following steps:
- exchanging information with a management system that includes the logic of the material flow to be conveyed,
- providing a first communication level (K1) between the individual conveyor modules (11) for configuring the conveyor system (10) with a communication protocol which is not real-time capable, and
- providing a second communication level (K2) between the individual conveyor modules (11) for controlling the respective at least one conveyor device (13), wherein the second communication level is designed to be real-time capable, **characterised in that**
the layout of the conveyor system and thus the topology are recognised by the communication level K1 and based on this the communication level K2 is configured.

14. The method according to claim 13 wherein the first level communication (K1) consists of a protocol that can communicate without any pre-configuration or addressing.

15. The method according to any one of claims 13 to 14, wherein the communication of the second communication layer (K2) consists of a protocol that can communicate via a BUS, line, star or ring topology, preferably a CAN or CANopen or an Ethernet-based protocol.

## Revendications

1. Système de transport modulaire (10) comprenant plusieurs modules de transport individuels (11), un module de transport individuel (11) comprenant
- au moins un dispositif de transport (13),
- au moins une alimentation en tension,
- au moins un actionneur pour entraîner le dispositif de transport (13),
- une unité de puissance pour la commande de l'actionneur (MC) et
- une unité de commande intégrée (12),
l'unité de commande intégrée (12) présentant une unité de calcul pour le traitement d'informations, et une unité de communication (14), et l'unité de communication (14) étant conçue pour réaliser la communication des modules de transport individuels (11) d'une part avec une commande centralisée et/ou d'autre part la communication des modules de transport individuels (11) entre eux,
**caractérisé en ce que** la communication des modules de transport individuels (11) entre eux est réalisée dans deux niveaux de communication logiques (K1, K2) par deux interfaces de communication séparées l'une de l'autre et indépendantes et qu'un niveau de communication (K1) sert à la détection de structure et à la configuration du système de transport (10).

2. Système de transport modulaire (10) selon la revendication 1, dans lequel la topologie du flux de matière dans le système de transport est identique à la topologie du réseau de communication qui est constituée de la commande centralisée et/ou des unités de communication (14) des modules de transport individuels (11).

3. Système de transport modulaire (10) selon une des revendications précédentes, dans lequel l'unité de communication (14) est conçue de manière à ce qu'un premier niveau de communication entre les modules de transport individuels (11) comprenne un protocole de communication qui n'est pas apte à fonctionner en temps réel.

4. Système de transport modulaire (10) selon une des revendications précédentes, dans lequel l'unité de communication (14) est conçue de manière à ce qu'un second niveau de communication soit prévu entre les modules de transport individuels (11) pour commander l'au moins un dispositif de transport respectif (13), le second niveau de communication étant conçu pour être apte à fonctionner en temps réel.

5. Système de transport modulaire (10) selon une des revendications précédentes, dans lequel les deux niveaux de communication peuvent fonctionner parallèlement pendant le fonctionnement du système (10).

6. Système de transport modulaire (10) selon une des revendications précédentes, dans lequel il est prévu comme interface pour le premier niveau de communication une interface pouvant être engrenée et/ou une interface sérielle et/ou une interface Ethernet.

7. Système de transport modulaire (10) selon une des revendications précédentes, dans lequel il est prévu, comme interface pour le second niveau de communication, une interface à BUS, et/ou une interface basée sur Ethernet et/ou une topologie en ligne, en étoile et/ou en anneau.

8. Système de transport modulaire (10) selon une des revendications précédentes, dans lequel l'unité de communication (14) d'un module de transport individuel (11) comprend une pluralité de raccordements (15) avec un nombre de raccordements (15) qui correspond au nombre de modules de transport individuels voisins (11) avec lesquels le module de transport individuel (11) communique.

9. Système de transport modulaire (10) selon une des revendications précédentes, dans lequel l'unité de communication (14) de chaque module de transport individuel (11) comprend une pluralité de raccordements (15) avec un nombre de raccordements (15) qui correspond au plus grand nombre de modules de transport individuels voisins (11).

10. Système de transport modulaire (10) selon une des revendications précédentes, dans lequel, par l'intermédiaire de l'interface non apte à fonctionner en temps réel, d'autres capteurs ou acteurs peuvent être raccordés à un module de transport individuel (11).

11. Système de transport modulaire (10) selon une des revendications précédentes, dans lequel l'alimentation en tension se fait depuis un module de transport individuel (11) vers des modules de transport individuels voisins (11) par câble.

12. Système de transport modulaire (10) selon une des revendications précédentes, dans lequel il est prévu comme modules de transport individuels (11) des modules de transport individuels à grande échelle, ou des convoyeurs à rouleaux, des éjecteurs, des convoyeurs curvilignes ou des fusionneurs, et/ou des modules de transport individuels à petite échelle, ou un groupement d'une pluralité de modules de transport individuels.

13. Procédé de commande du système de transport (10) comprenant plusieurs modules de transport individuels (11), un module de transport individuel (11) comprenant au moins un dispositif de transport (13), au moins un actionneur pour entraîner le dispositif de transport (13) et une unité de commande intégrée (12), l'unité de commande intégrée (12) présentant une unité de communication (14) qui exécute les étapes suivantes :
- échange d'informations avec un système de gestion qui contient la logique du flux de matières à transporter,
- mise à disposition d'un premier niveau de communication (K1) entre les modules de transport individuels (11) pour la configuration du système de transport (10) avec un protocole de communication qui n'est pas apte à fonctionner en temps réel, et
- mise à disposition d'un second niveaux de communication (K2) entre les modules de transport individuels (11) pour la commande de l'au moins un système de transport respectif (13), le second niveau de communication étant conçu pour être en apte à fonctionner en temps réel, **caractérisé en ce que**
la structure du système de transport et ainsi la topologie du niveau de communication K1 sont détectés et le niveau de communication K2 est configuré en se basant là-dessus.

14. Procédé selon la revendication 13, dans lequel la communication du premier niveau (K1) consiste en un protocole qui peut communiquer sans préconfiguration ni adressage.

15. Procédé selon une des revendications 13 à 14, dans lequel la communication du second niveau de communication (K2) consiste en un protocole qui peut communiquer par une topologie en BUS, ligne, étoile ou anneau, de préférence un protocole basé sur CAN ou CANopen ou Ethernet.
